# EUROPEAN PATENT APPLICATION

(11) **EP 4 645 490 A1**
(43) Date of publication of application: **05.11.2025**
(21) Application number: 25173944.7
(22) Date of filing: 02.05.2025
(51) Int. Cl.: H01M 10/04, H01M 50/213, H01M 50/296, H01M 50/528, H01M 50/531, H01M 50/533, H01M 50/545, H01M 50/552, H01M 50/559, H01M 50/538, H01M 10/0587

(54) **BATTERY CELL**

(30) Priority: 03.05.2024 KR 20240059199
(71) Applicant: SK On Co., Ltd., Seoul 03161 (KR)
(72) Inventor: PAK, Byeong Jun, 34124 Daejeon (KR); JU, Seung Hoon, 34124 Daejeon (KR)
(74) Representative: Stolmár & Partner Patentanwälte PartG mbB

(57) **Abstract**

A battery cell according to the present disclosure may include: an electrode assembly including a first electrode, a second electrode and a separator; a case accommodating the electrode assembly and electrically connected to the first electrode; a cap plate connected to the case; a terminal member provided on the cap plate; and a pin member disposed on a core of the electrode assembly and electrically connected to the second electrode and the terminal member.

## Description

### TECHNICAL FIELD

The present disclosure relates to a battery cell.

### BACKGROUND

Batteries are widely used in small electronic devices such as mobile phones and laptop computers as well as in medium and large mechanical devices such as electric vehicles (EV), and have the advantage of being rechargeable and reusable.

An electrode assembly may be configured by an electrode plate including a cathode plate and an anode plate, and a separator separating the cathode plate and the anode plate. An electrode assembly manufactured in a stack type, a stack-folding type, a roll type, or the like, may be stored in a case selected according to the intended use such as a pouch type, a square type, a cylindrical type, or the like, and a battery cell may be manufactured by sealing the case after injecting an electrolyte.

Various studies are required to increase the efficiency of charging and/or rapid charging of such battery cells and to increase the discharge efficiency.

### SUMMARY

According to an aspect of the present disclosure, a battery cell having reduced internal resistance is provided.

In addition, according to an aspect of the present disclosure, a battery cell having increased charging and/or rapid charging efficiency and increased discharging efficiency is provided.

In addition, the present disclosure may be widely applied to devices within green technology fields such as solar power generation and wind power generation.

In addition, the present disclosure may be applied to eco-friendly devices such as eco-friendly electric vehicles and hybrid vehicles for ameliorating the effects of climate change by suppressing air pollution and greenhouse gas emissions.

A battery cell according to a preferred embodiment of the present disclosure may include: an electrode assembly including a first electrode, a second electrode and a separator; a case accommodating the electrode assembly and electrically connected to the first electrode; a cap plate connected to the case; a terminal member provided on the cap plate; and a pin member disposed on a core of the electrode assembly and electrically connected to the second electrode and the terminal member.

In a preferred embodiment, the first electrode may include: a first electrode plate including a first active material region, which is a region coated with a first electrode active material, and a first non-coating region bent and extending from the first active material region, and the second electrode may include: a second electrode plate including a second active material region, which is a region coated with a second electrode active material, and a second non-coating region bent and extending from the second active material region, and the first non-coating region may be connected to the case, and the second non-coating region may be connected to the pin member.

In a preferred embodiment, the battery cell may further include: a first current collector plate connected to the first non-coating region and the case; and a second current collector plate connected to the second non-coating region and the pin member.

In a preferred embodiment, the second non-coating region may be spaced farther from the terminal member or the cap plate in a longitudinal direction of the pin member than the first non-coating region.

In a preferred embodiment, the pin member may include: a body portion extending from the core in a height direction of the electrode assembly; a first end extending from the body portion and contacting the terminal member; and a second end extending from the body portion and contacting a second current collector plate connected to the case, and the first end may be disposed closer to the terminal member or the cap plate than the second end.

In a preferred embodiment, the battery cell may further include: a first insulating member electrically insulating the first electrode from the terminal member and the pin member; a second insulating member electrically insulating the second electrode from the case; and a third insulating member electrically insulating the second electrode from the cap plate.

In a preferred embodiment, the second insulating member may be interposed between the second current collecting plate connected to the case and the case.

In a preferred embodiment, the terminal member may protrude outwardly of the cap plate.

In a preferred embodiment, the pin member may protrude outwardly of the cap plate.

In a preferred embodiment, the pin member may include a material having electrical conductivity.

In a preferred embodiment, the pin member may include a material including aluminum.

In a preferred embodiment, at least one of the first end or the second end may be a closed region.

In a preferred embodiment, the first end and the terminal member may be in surface contact or line contact.

In a preferred embodiment, the first end may be disposed inside the terminal member.

A battery cell according to another preferred embodiment of the present disclosure may include: an electrode assembly including a cathode, an anode and a separator; a case accommodating the electrode assembly and electrically connected to the anode; a cap plate covering the case and insulated from the case; and a pin member disposed on a core of the electrode assembly and electrically connected to the cathode and the cap plate.

In a preferred embodiment, a connection region between the cathode and the pin member may be spaced farther from the cap plate in a longitudinal direction of the pin member than a connection region between the anode and the case.

In a preferred embodiment, the pin member may include a pin hollow portion inside.

According to an aspect of the present disclosure, a battery cell having reduced internal resistance is provided.

In addition, according to an aspect of the present disclosure, a battery cell having increased charging and/or rapid charging efficiency and increased discharging efficiency is provided.

In addition, the present disclosure may be widely applied to devices within green technology fields such as solar power generation and wind power generation.

In addition, the present disclosure may be applied to eco-friendly devices such as eco-friendly electric vehicles and hybrid vehicles for ameliorating the effects of climate change by suppressing air pollution and greenhouse gas emissions.

### BRIEF DESCRIPTION OF DRAWINGS

Certain aspects, features, and advantages of the present disclosure are illustrated by the following detailed description with reference to the accompanying drawings.
FIG. 1 is a schematic exploded perspective view of a battery cell according to a preferred embodiment of the present disclosure.
FIG. 2 is a schematic cross-sectional view taken along line I-I' of FIG. 1.
FIG. 3 is a schematic cross-sectional view taken along line II-II' of FIG. 1.
FIG. 4 is a schematic cross-sectional view of a battery cell in a width direction or a longitudinal direction according to a preferred embodiment of the present disclosure.
FIG. 5 is a schematic cross-sectional view of a battery cell in a longitudinal direction according to a preferred embodiment of the present disclosure, and FIG. 5 schematically illustrates a current path of the battery cell.
FIG. 6 is a schematic cross-sectional view of a battery cell in a longitudinal direction according to another preferred embodiment of the present disclosure, and FIG. 6 schematically illustrates a current path of the battery cell.
FIG. 7 is a schematic cross-sectional view of a portion of a battery cell according to another preferred embodiment of the present disclosure.
FIG. 8 is a schematic cross-sectional view of a portion of a battery cell according to another preferred embodiment of the present disclosure.
FIG. 9 schematically illustrates a cross-section of a battery cell in a width direction according to another preferred embodiment of the present disclosure.

### DETAILED DESCRIPTION

In order to help understand the description of a preferred embodiment of the present disclosure, elements described with the same symbol in the attached drawings are the same elements. Some components of the attached drawings are exaggerated, omitted, or schematically illustrated, and sizes of each component does not completely reflect actual sizes.

Additionally, in order to clarify the gist of the present disclosure, descriptions of elements and techniques well known by conventional techniques will be omitted, and hereinafter, the present disclosure will be described in detail with reference to the attached drawings.

Hereinafter, an X-axis and a Y-axis illustrated in the drawings are a diameter direction or a width direction of a case 120, and a Z-axis is a height direction or a longitudinal direction of a battery cell 100, the case 120, and an electrode assembly 110. However, this is a direction arbitrarily set for convenience of explanation, and the above-mentioned directions may be changed.

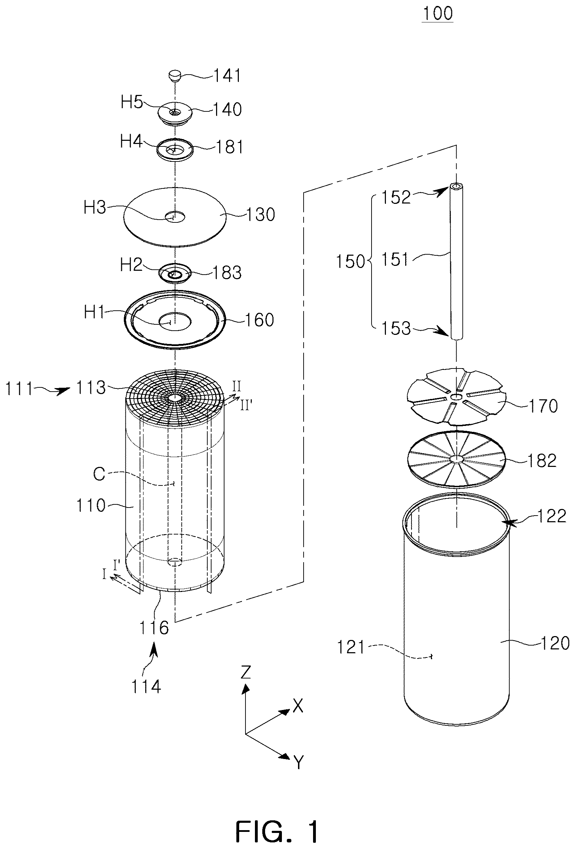

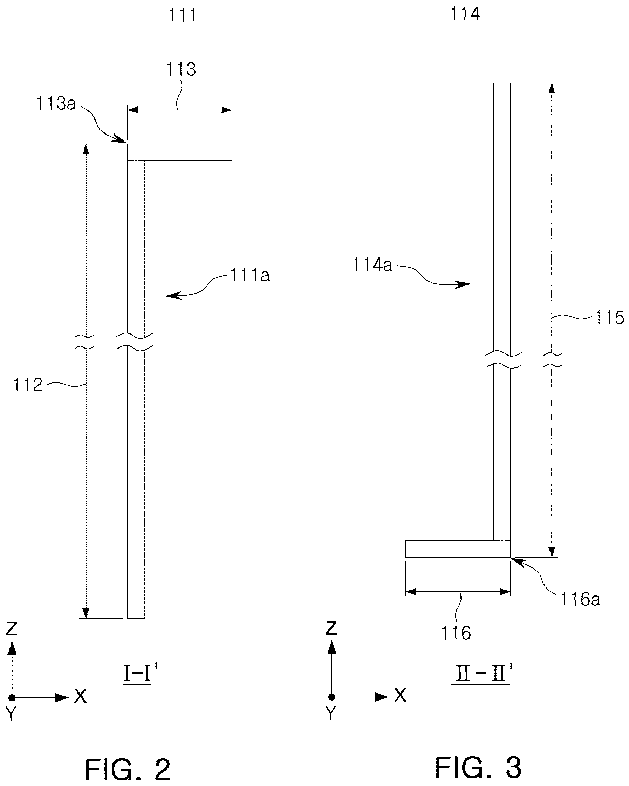

FIG. 1 is a schematic exploded perspective view of a battery cell 100 according to a preferred embodiment of the present disclosure, FIG. 2 is a schematic cross-sectional view taken along line I-I' of FIG. 1, and FIG. 3 is a schematic cross-sectional view taken along line II-II' of FIG. 1.

As illustrated in FIGS. 1 to 3, the battery cell 100 according to a preferred embodiment of the present disclosure may include an electrode assembly 110 including a first electrode 111, a second electrode 114 and a separator, a case 120 accommodating the electrode assembly 110 and electrically connected to the first electrode 111, a cap plate 130 connected to the case 120, a terminal member 140 provided on the cap plate 130, and a pin member 150 disposed on the core C of the electrode assembly 110 and electrically connected to the second electrode 114 and the terminal member 140.

The electrode assembly 110 may be formed by overlapping at least one first electrode 111, at least one second electrode 114 and at least one separator, and winding the first electrode 111, the second electrode 114 and the separator around a core. In this case, the first electrode 111 and the second electrode 114 may be disposed alternately in an X-Y plane, but may be mutually isolated by the separator.

In a preferred embodiment, the first electrode 111 may be an anode, and the second electrode 114 may be a cathode(or a positive electrode or a second electrode).

The case 120 may include an opening 122 formed by opening one side thereof. The case 120 may include an electrode assembly accommodation space 121 which is an internal space connected to the opening 122. The electrode assembly 110 may be introduced into the electrode assembly accommodation space 121 through the opening 122.

In a preferred embodiment, a second current collector 170 and a second insulating member 182 may be disposed in a power portion of the electrode assembly 110 in a -Z-direction in the electrode assembly accommodation space 121. The second current collector 170 and the second insulating member 182 will be described below.

The core C may be disposed in a center of the electrode assembly 110, and the core may be the center of the electrode assembly 110. The electrode assembly 110 may be wound around the core C. The pin member 150 may be inserted into the core C. The pin member 150 may facilitate the winding of the electrode assembly 110 by supporting the core C of the electrode assembly 110, and may contribute to improving the assembly efficiency of the electrode assembly 110.

In addition, the pin member 150 may contribute to increasing mechanical strength of the battery cell and preventing internal short circuits.

When the electrode assembly 110, a first current collector 160, the second current collector 170 and the second insulating member 182 are accommodated in the electrode assembly accommodation space 121, the opening 122 of the case 120 may be covered with the cap plate 130. In this case, an electrolyte may be injected into the electrode assembly accommodation space 121. When the injection of the electrolyte is completed, the cap plate 130 may be coupled to the case 120. However, the injection time of the electrolyte is not necessarily limited by the present disclosure. The cap plate 130 covering the opening 122 may be welded to the case 120. In some cases, a material having electrical insulating properties may be provided in a connection region between the cap plate 130 and the case 120.

In a preferred embodiment, the cap plate 130 may be provided as a cap assembly. The cap assembly may include a cap plate 130, a first insulating member 181 facing the cap plate 130, a third insulating member 183, a terminal member 140, and a terminal cover 141.

The case 120, the cap plate 130, and the terminal member 140 are provided with an electrically conductive material, and the terminal member 140 may be electrically insulated from the case 120 and the cap plate 130 by the first insulating member 181 and the third insulating member 183.

In a preferred embodiment, the first current collector plate 160, the third insulating member 183, the cap plate 130, the first insulating member 181, and the terminal member 140 may be provided with through-holes H1, H2, H3, H4 and H5, respectively. Each of the through-holes H1, H2, H3, H4 and H5 may be concentric. According thereto, the assembly and alignment of the cap assembly may be made easier. Specifically, the terminal cover 141 may be inserted into the through-hole H5 provided in the terminal member 140. However, the presence or absence of the terminal cover 141 is not necessarily limited by the present disclosure.

Meanwhile, as illustrated in FIG. 2, the first electrode 111 may include a first electrode plate 111a including a first active material region 112 which is a region coated with the first electrode active material and a first non-coating region 113 bent and extending from the first active material region 112.

The first electrode plate 111a may be formed of a material including copper, gold, stainless steel, nickel, aluminum, titanium, or alloys thereof.

The first electrode plate 111a may have a relatively long sheet shape, and may be coated with the first electrode active material in a longitudinal direction of the first electrode plate 111a.

The first electrode active material may have a slurry form in which an anode active material, a binder, a conductive material, a dispersant, and the like, are mixed and stirred. The first electrode active material may be compressed and dried after being coated on the first electrode plate 111a. A region excluding the first non-coating region 113 may be coated with the first electrode active material.

The first non-coating region 113 is a region which is not coated with the first electrode active material, and may be formed by notching a side surface of the first electrode plate 111a. The first non-coating region 113 may be formed in plural on one first electrode plate 111a.

The first electrode plate 111a may include a first bent portion 113a, which is a region formed by bending an end of the first electrode plate 111a toward the core C (see FIG. 1). The first non-coating region 113 may be a region corresponding to the first bent portion 113a to the end of the first electrode plate 111a.

In a preferred embodiment, the first bend 113a may be coated with an insulating material.

The first non-coating region 113 may extend in a direction oriented toward the core C (see FIG. 1). In this case, the first non-coating region 113 may serve as an anode(or a negative electrode or a first electrode) tab, and a current conduction path may be widened to reduce resistance.

In the case in which a plurality of first non-coating regions 113 are provided, all of the plurality of first non-coating regions 113 may extend in a direction oriented toward the core (C of FIG. 1).

A battery cell according to a preferred embodiment of the present disclosure may include the first current collector 160 connected to the first non-coating region 113 and the case 120. The first current collector 160 may be in contact with the first non-coating region 113 and the case 120, and may cover at least a partial region of the first non-coating region 113 on the X-Y plane.

The first non-coating region 113 may be connected to the case 120 by the first collector plate 160, and thus the case 120 may function as an anode. The case 120 may be made of a metal material including stainless steel, or the like, and may be formed of a material having electrical conductivity. However, the type is not necessarily limited by the present disclosure.

As illustrated in FIG. 3, the second electrode 114 may include a second electrode plate 114a including a second active material region 115 which is a region coated with a second electrode active material, and a second non-coating region 116 bent and extending from the second active material region 115.

The second electrode plate 114a may be formed of a material including aluminum, stainless steel, nickel, titanium, copper, or alloys thereof.

The second electrode plate 114a may have a relatively long sheet shape, and may be coated with the second electrode active material in a longitudinal direction of the second electrode plate 114a. If necessary, the second electrode plate 114a may include a region not coated with the second electrode active material in the longitudinal direction of the second electrode plate 114a.

That is, the second electrode active material may be coated discontinuously in the longitudinal direction of the second electrode plate 114a. This may also be applied in the same principle to the first electrode plate 111a and the first electrode active material described above.

The second electrode active material may have a slurry form in which a cathode active material, a binder, a conductive agent, a dispersant, and the like, are mixed and stirred. The second active material region 115 may be coated with the second electrode active material.

The second non-coating region 116 is a region not coated with the second electrode active material, and may be formed by notching a side surface of the second electrode plate 114a. The second non-coating region 116 may be formed in plural on one second electrode plate 114a.

The second electrode plate 114a may include a second bent portion 116a, which is a region formed by bending an end of the second electrode plate 114a in a direction oriented toward the core C (see FIG. 1). The second non-coating region 116 may be a region corresponding to a portion from the second bent portion 116a to the end of the second electrode plate 114a.

The second non-coating region 116 may extend in a direction oriented toward the core C (see FIG. 1). In this case, the second non-coating region 116 may serve as a cathode tab, and a current conduction path may be widened, thereby reducing resistance.

In the case in which a plurality of second non-coating portions 116 are provided, and all of the second non-coating portions 116 may extend in a direction oriented toward the core C (see FIG. 1).

In a preferred embodiment, the second bending portion 116a may be coated with an insulating material.

As illustrated in FIG. 1, the second non-coating portion 116 may be disposed below the first non-coating portion 113 in the -Z-direction. The second non-coating portion 116 may be disposed below the first non-coating portion 113 in a height direction or a longitudinal direction (Z-axis direction) of the case 120.

A battery cell according to a preferred embodiment of the present disclosure may include a second collector plate 170 connected to the second non-coating portion 116 and the pin member 150. The second collector plate 170 may cover at least a partial region of the second non-coating region 116 on the X-Y plane, and may electrically connect the second non-coating region 116 and the pin member 150.

The second collector plate 170 may be in contact with the case 120 and be electrically connected to the case 120. The second non-coating region 116 may be spaced apart from the first non-coating region 113 in the height direction or the longitudinal direction (Z-axis direction) of the case 120. The second non-coating region 116 may be connected to the pin member 150, and thus the pin member 150 may function as an anode. The pin member 150 may be formed of an electrically conductive material and may be inserted into the core C of the electrode assembly 110.

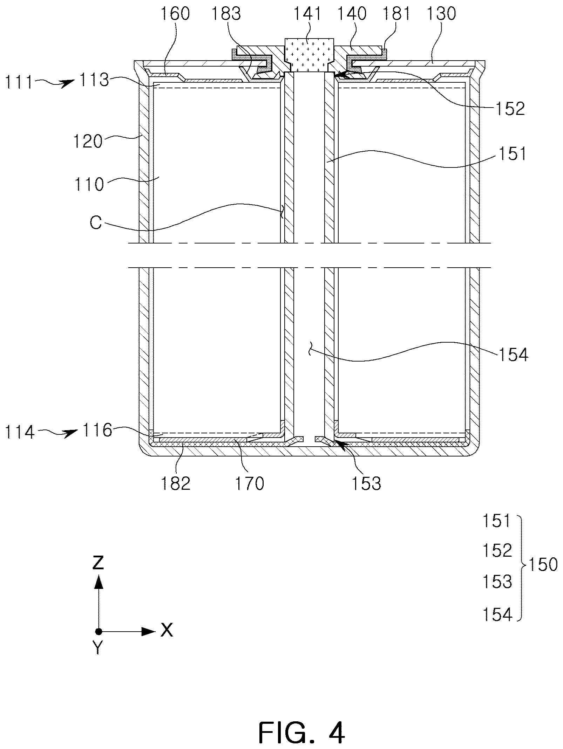

As illustrated in FIG. 4, in a preferred embodiment, the second non-coating portion 116 may be spaced farther from the terminal member 140 or the cap plate 130 in a longitudinal direction (Z-axis direction) of the pin member 150 than the first non-coating portion 113.

The second non-coating portion 116 may be disposed below the first non-coating portion 113 in the longitudinal direction (Z-axis direction) of the pin member 150 or the battery cell. A distance by which the second non-coating portion 116 is spaced apart from the cap plate 130 or the terminal member 140 in the - Z-direction may be longer than a distance by which the first non-coating portion 113 is spaced apart from the cap plate 130 or the terminal member 140 in the -Z-direction. The spaced distance may be a straight line distance in a direction parallel to the Z-axis.

According thereto, the second non-coating region 116 included in the cathode of the battery cell may be disposed further downwardly in the -Z-direction than the first non-coating region 113 included in the anode. In this structure, if the second non-coating region 116 is electrically connected to the pin member 150, a current path may be formed along the core C of the electrode assembly 110.

The pin member 150 according to a preferred embodiment of the present disclosure may include a body portion 151 extending from the core C in the height direction or the longitudinal direction (Z-axis direction) of the electrode assembly 110, a first end portion 152 extending from the body portion 151 and contacting the terminal member 140, and a second end portion 153 extending from the body portion 151 and contacting the second electrode plate 114a.

For example, the body portion 151 may be a straight line parallel to the Z-axis, the first end 152 may extend from one side of the body portion 151, and the second end 153 may extend from the other side of the body portion 151.

As described above, the battery cell according to a preferred embodiment of the present disclosure may be a tab less type battery cell. According thereto, a plurality of first non-coating regions 113 not coated with the first electrode active material, which is an anode active material, may be disposed in an upper portion of the electrode assembly 110, and the plurality of first non-coating regions 113 may be connected to the first current collector plate 160, which is an anode current collector plate.

In addition, a plurality of second non-coating regions 116 not coated with the second electrode active material, which is a cathode active material, may be disposed in a lower portion of the electrode assembly 110, and the plurality of second non-coating regions 116 may be connected to the second current collector plate 170, which is a cathode current collector plate. Accordingly, the current collection efficiency of the battery cell may be improved.

FIG. 4 schematically illustrates a width direction or a longitudinal cross-section of a battery cell according to a preferred embodiment of the present disclosure. In FIG. 4, a portion of the central portion of the battery cell in the longitudinal direction of the battery cell is omitted.

As illustrated in FIG. 1 and FIG. 4, the body portion 151 of the pin member 150 may be inserted into the core C, and the first end 152 and the second end 153 may be exposed to the outside of the core C.

The first end 152 may be disposed higher than the second end 153 in the +Z-direction, and may be disposed closer to the cap plate 130 than the second end 153. The first end 152 may be in contact with the terminal member 140 insulated from the cap plate 130. Accordingly, the pin member 150 may be electrically connected to the terminal member 140.

The terminal member 140 may be provided with a material having electrical conductivity and may function as a cathode of the battery cell.

In a preferred embodiment, the terminal member 140 may protrude outwardly of the cap plate 130 and may be exposed to the outside of the cap plate 130, and a partial region of the terminal member 140 may be covered with the terminal cover 141.

The first insulating member 181 may be provided between the terminal member 140 and the cap plate 130. The first insulating member 181 may be formed of a material having electrical insulation properties and may perform an electrical insulation function between the terminal member 140 and the cap plate 130.

The second end 153 of the pin member 150 may be disposed below the first end 152 in the -Z-direction. The second end 153 may be in contact with the second collector plate 170. In a preferred embodiment, the second end 153 may be welded to the second collector plate 170. However, this is not necessarily limited by the present disclosure, and the second end 153 and the second collector plate 170 may be coupled to each other by various physical and chemical methods, such as fitting coupling or coupling by an adhesive, in addition to welding.

A contact region between the second collector plate 170 and the second end 153 may be spaced apart from the terminal member 140. For example, the contact region of the second collector plate 170 and the second end 153 may be spaced apart from the terminal member 140 or the cap plate 130 in the -Z-direction. In addition, the first collector plate 160 may also be spaced apart from the terminal member 140.

In this case, the first end 152 may be disposed closer to the terminal member 140 or the cap plate 130 than the second end 153, and the second end 153 may be spaced farther from the terminal member 140 or the cap plate 130 than the first end 152. For example, a distance by which the second end 153 is spaced apart from the terminal member 140 or the cap plate 130 in the -Z-direction may be longer than a distance by which the first end 152 is spaced apart from the terminal member 140 or the cap plate 130 in the - Z-direction.

Accordingly, the contact region between the second collector plate 170 and the second end 153 may be spaced farther from the terminal member 140 or the cap plate 130 than the first collector plate 160 or the first end 152.

In a preferred embodiment, the contact region between the second collector plate 170 and the second end 153 may be disposed below the first end 152 in the -Z-direction and may be disposed in a lower portion of the battery cell. In contrast, the first collector plate 160 may be disposed closer to the terminal member 140 or the cap plate 130 than the second end 153, and may be disposed in an upper portion of the battery cell.

Accordingly, the contact region of the first collector plate 160 and the first non-coating region 113 may also be disposed in the upper portion of the battery cell, and the contact region of the first collector plate 160 and the first non-coating region 113 may be disposed higher than the contact region of the second collector plate 170 and the second non-coating region 116.

In FIG. 4, a height of the contact region between the first collector plate 160 and the first non-coating region 113 in the Z-axis may be higher than a height of the contact region between the second collector plate 170 and the second non-coating region 116 in the Z-axis.

In addition, in the present disclosure, the height of the contact region between the first end 152 and the terminal member 140 in the Z-axis may be higher than the height of the contact region between the first current collector 160 and the first non-coating region 113 in the Z-axis.

Since the terminal member 140 functions as a cathode terminal of the battery cell as described above, in the present disclosure, the cathode terminal may be disposed in the upper portion of the battery cell.

That is, in the present disclosure, the second non-coating region 116 corresponding to the cathode tab of the battery cell is disposed in the lower portion of the battery cell, while the cathode terminal exposed to the outside of the case 120 of the battery cell, i.e., the terminal member 140, may be disposed in the upper portion of the battery cell.

In a preferred embodiment, the pin member 150 may be provided with the same material as the second electrode plate 114a. For example, the pin member 150 may be provided with a material including aluminum.

Additionally, in a preferred embodiment, the pin member 150 may include a pin hollow portion 154. The pin hollow portion 154 may contribute to the weight reduction of the pin member 150, and may contribute to improving the energy density of the battery cell.

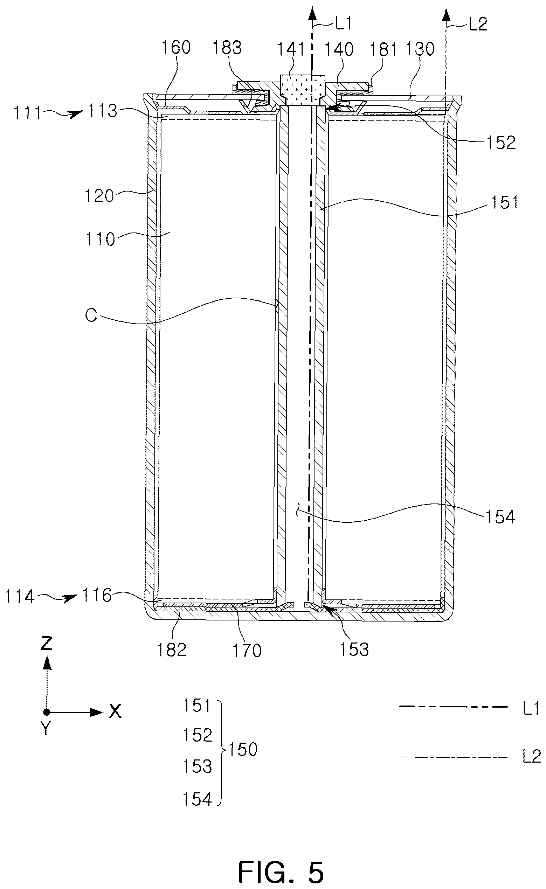

FIG. 5 schematically illustrates a longitudinal cross-section of a battery cell according to a preferred embodiment of the present disclosure, and a current path of the battery cell is schematically illustrated in FIG. 5.

Hereinafter, an insulation structure and a current path of the battery cell will be described in detail with reference to FIGS. 4 and 5.

A battery cell according to a preferred embodiment of the present disclosure may include a first insulating member 181 electrically insulating a first electrode 111 from a terminal member 140 and a pin member 150, a second insulating member 182 electrically insulating a second electrode 114 from a case 120, and a third insulating member 183 electrically insulating a second electrode 114 from a cap plate 130.

The first insulating member 181 may be interposed between the cap plate 130 and the terminal member 140 and may block contact between the cap plate 130 and the terminal member 140.

The second insulating member 182 may be accommodated in the electrode assembly accommodation space 121 and may be disposed in the lower portion of the electrode assembly 110. The second insulating member 182 may be interposed between the second collector plate 170 and the case 120, and may block contact between the second collector plate 170 and the case 120, thereby electrically insulating the second electrode 114 and the case 120.

In a preferred embodiment, at least a partial region of the second end 153 of the pin member 150 may be supported by the second insulating member 182. In this case, a side region of the second end 153 of the pin member 150 may be welded to the second collector plate 170.

The third insulating member 183 may be disposed on an upper portion of the first non-coating region 113, and may block the first non-coating region 113 and/or the first collector plate 160 from contacting the terminal member 140. The third insulating member 183 may electrically insulate the second electrode 114 and the first electrode 111.

The first insulating member 181, the second insulating member 182, and the third insulating member 183 may be provided with a material having electrical insulation properties, and the types thereof are not necessarily limited by the present disclosure.

In addition, if necessary, the battery cell may have a structure in which the case 120 and the cap plate 130 are electrically insulated, and the cap plate 130 and the terminal member 140 are electrically connected.

According to the present disclosure as described above, the current path illustrated in FIG. 5 may be formed.

As illustrated in FIG. 5, according to a preferred embodiment of the present disclosure, the first collector plate 160 may be disposed closer to the cap plate 130 than the second collector plate 170, and the first electrode 111 corresponding to the anode of the electrode assembly 110 may be disposed in an upper portion of the case 120, and the second electrode 114 corresponding to the cathode of the electrode assembly 110 may be disposed in a lower portion of the case 120.

According to this present disclosure, an anode current path L2 may be formed along the first collector plate 160, the case 120 and the cap plate 130, and a cathode current path L1 may be formed along the core C (see FIG. 1) of the electrode assembly 110. The cathode current path L1 may be formed in the center of the electrode assembly 110 along the core C (see FIG. 1).

According to the present disclosure, the internal resistance of the battery cell may be reduced, and the charging and discharging efficiency of the battery cell may be improved.

In addition, according to the present disclosure, the current path may be shortened, the current flow may be smoothed, and the heat generation of the battery cell may be reduced. This may contribute to improving the charging and/or rapid charging efficiency of the battery cell and extending the lifespan of the battery cell.

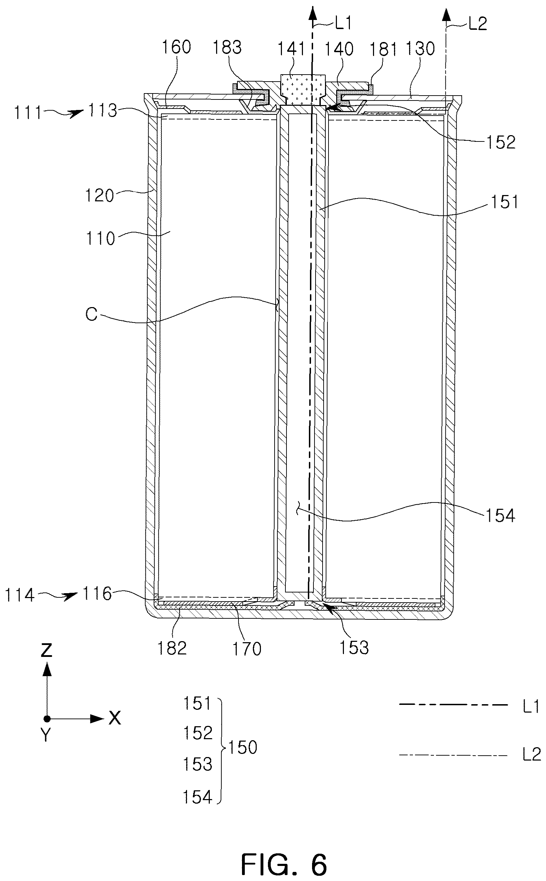

FIG. 6 is a schematic diagram illustrating a longitudinal cross-section of a battery cell according to another preferred embodiment of the present disclosure, and a current path of the battery cell is schematically illustrated in FIG. 6.

As illustrated in FIG. 6, at least one of the first end 152 and the second end 153 may be a closed region.

The first end 152 of the pin member 150 may be a closed region on the X-Y plane. The pin member 150 may be a closed region in the first end 152, and the first end 152 may be in surface contact or line contact with the terminal member 140. The first end 152 of the pin member 150 may be a region covered or filled with a material forming the pin member 150. Accordingly, by providing the first end 152 of the pin member 150 as a closed region, an inner region of the pin member 150 may be separated or isolated from an outer region.

In a preferred embodiment, when a terminal cover 141 is provided, the first end portion may be in contact with at least one of the terminal member 140 and the terminal cover 141. In this case, the first end portion 152 may be in surface contact or line contact with at least a partial region of at least one of the terminal member 140 and the terminal cover 141.

Accordingly, the bonding strength between the first end portion 152 of the pin member 150 and at least one of the terminal member 140 and the terminal cover 141 may be improved, and the assembly efficiency may be improved. For example, when the first end portion 152 of the pin member 150 and at least one of the terminal member 140 and the terminal cover 141 are welded, a welding area may be increased, and the welding efficiency may be improved.

The second end portion 153 of the pin member 150 may also be a closed region on the X-Y plane. The pin member 150 may be a blocked region in the second end 153 and may be in surface contact or line contact with at least a partial region of the second insulating member 182.

Accordingly, the assembly efficiency and welding efficiency of the second end 153 may also be improved.

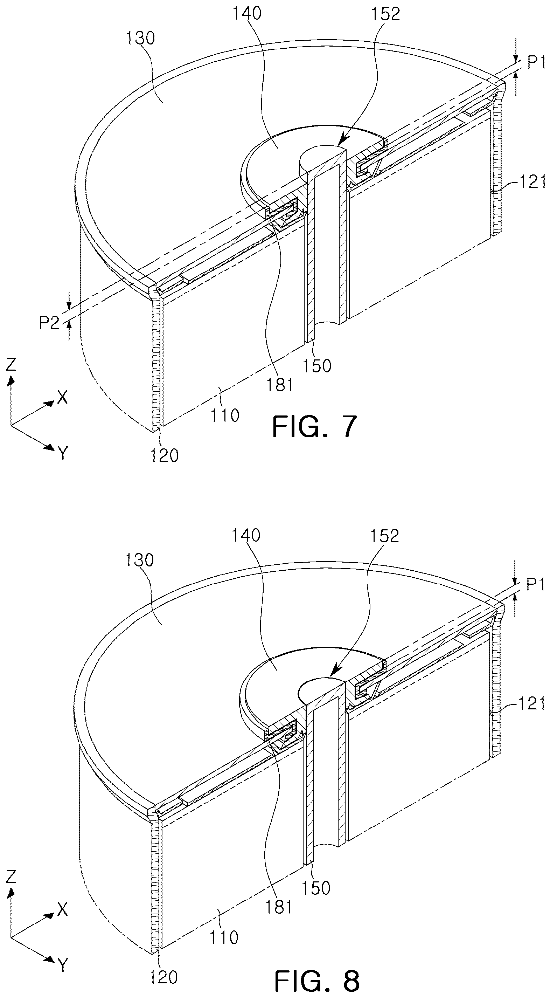

Meanwhile, FIG. 7 schematically illustrates a portion of a cross-section of a battery cell according to another preferred embodiment of the present disclosure.

As illustrated in FIG. 7, in another preferred embodiment of the present disclosure, the pin member 150 may protrude outside the cap plate 130.

In a preferred embodiment, the terminal member 140 may protrude from the first insulating member 181 by a first protrusion height P1, and the first end 152 of the pin member 150 may protrude from the terminal member 140 by a second protrusion height P2.

In this case, the terminal cover 141 may be excluded from the terminal member 140, and the pin member 150 may have a form penetrating through the terminal member 140. If necessary, the first end 152 of the pin member 150 may be insulated and sealed by a separate sealing member, or the like.

FIG. 8 schematically illustrates a portion of a cross-section of a battery cell according to another preferred embodiment of the present disclosure.

As illustrated in FIG. 8, in a preferred embodiment of the present disclosure, the first end 152 of the pin member 150 may be disposed inside the terminal member 140.

The terminal member 140 may protrude from the first insulating member 181 by the first protrusion height P1. On the other hand, the first end 152 of the pin member 150 does not protrude outside the terminal member 140, and the second protrusion height P2 (see FIG. 7) may be 0.

In a preferred embodiment, the first end 152 of the pin member 150 may be surrounded by the terminal member 140, and the first end 152 may be disposed inside the terminal member 140.

Accordingly, when a battery cell assembly, such as a battery module or a battery pack, is configured with a plurality of battery cells, a weldable region of the battery cells may be increased, and the assembly efficiency may be improved.

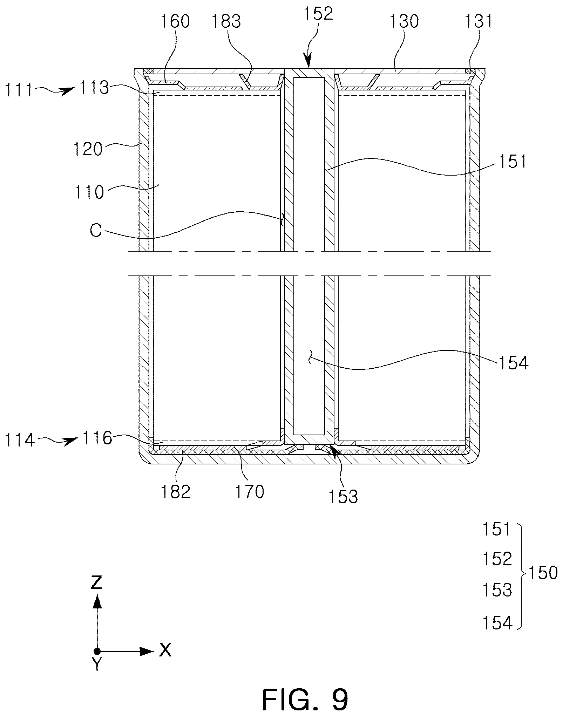

Meanwhile, FIG. 9 schematically illustrates a cross-section in a width direction of a battery cell according to another preferred embodiment of the present disclosure. The present disclosure as another aspect will be described with reference to FIG. 9.

According to another preferred embodiment of the present disclosure, provided is a battery cell 100 including an electrode assembly 110 including a cathode, an anode and a separator, a case 120 accommodating the electrode assembly 110 and electrically connected to the cathode, a cap plate 130 covering the case 120 and insulated from the case 120, and a pin member 150 disposed on a core C of the electrode assembly 110 and electrically connected to the cathode and the cap plate 130.

The cathode and the anode may be mutually isolated by the separator. The anode may include the first active material region 112 (see FIG. 2) which is a region in which a first electrode plate is coated with an anode active material, and the first non-coating region 113 (see FIG. 2) not coated with the anode active material.

The cathode may include the second active material region 115 (see FIG. 3) which is a region in which the second electrode plate 114a (see FIG. 3) is coated with a cathode active material, and the second non-coating region 116 (see FIG. 3) not coated with the cathode active material.

The first non-coating region 113 may be bent in the first active material region 112, and the second non-coating region 116 may be bent in the second active material region 115. The first non-coating region 113 may be electrically connected to the first collector plate 160, and the second non-coating region 116 may be connected to the second collector plate 170. Accordingly, the battery cell may have a tab-less structure.

The second collector plate 170 may be connected to the second end 153 of the pin member 150, thereby electrically connecting the pin member 150 and the cathode. The pin member 150 may be formed of a material having electrically conductivity, and may be a material including aluminum.

In another preferred embodiment, the pin member 150 may have a structure directly connected to the second non-coating region 116 without the second collector plate 170.

The first end 152 of the pin member 150 may be electrically connected to the cap plate 130. The cap plate 130 may include a cap insulating member 131, and may be electrically insulated from the case 120 by the cap insulating member 131.

The connection region between the cathode and the pin member 150 may be a region in which the second non-coating region 116 and the pin member 150 come into contact with each other, and the connection region between the anode and the case 120 may be a region in which the first non-coating region 113 and the case 120 come into contact with each other.

In a preferred embodiment, when the first non-coating region 113 is connected to the first collector plate 160, a region in which the first collector plate 160 and the case 120 come into contact with each other may be a connection region between the anode and the case 120. When the second non-coating region 116 is connected to the second collector plate 170, a region in which the second collector plate 170 and the second end 153 of the pin member 150 come into contact with each other may be a region of the cathode and the pin member 150.

The connection region of the cathode and the pin member 150 may be spaced farther from the cap plate 130 in the longitudinal direction (Z-axis direction) of the pin member 150 than the connection region between the anode and the case 120.

The connection region between the cathode and the pin member 150 may be disposed further downwardly in the -Z-direction than the connection region between the anode and the case 120. In the battery cell, the cathode may be disposed further downwardly in the -Z-direction than the anode.

Accordingly, a current path may be in the center of the electrode assembly 110 along the core C of the electrode assembly 110. In addition, since the current path is formed in the +Z-direction in the center of the electrode assembly 110, the current path may be shortened. This may contribute to reducing heat generation of the battery cell.

In addition, in a preferred embodiment, the pin member 150 may include a pin hollow portion 154 inside. The pin member 150 may be in the form of a hollow pipe having an empty interior, and the first end 152 and the second end 153 of the pin member may be closed regions. The pin hollow portion 154 may not be provided with any substance other than air, or may be in a vacuum state, depending on the case.

Accordingly, the weldability of the pin member may be improved, and the weight of the pin member may be reduced. Accordingly, this may contribute to improving the energy density.

The present disclosure also relates to the following aspects.

Aspect 1) A battery cell, comprising: an electrode assembly including a first electrode, a second electrode and a separator; a case accommodating the electrode assembly and electrically connected to the first electrode; a cap plate connected to the case; a terminal member provided on the cap plate; and a pin member disposed on a core of the electrode assembly and electrically connected to the second electrode and the terminal member.

Aspect 2) The battery cell of aspect 1, wherein the first electrode includes: a first electrode plate including a first active material region, which is a region coated with a first electrode active material, and a first non-coating region bent and extending from the first active material region, and the second electrode includes: a second electrode plate including a second active material region, which is a region coated with a second electrode active material, and a second non-coating region bent and extending from the second active material region, wherein the first non-coating region is connected to the case, and the second non-coating region is connected to the pin member.

Aspect 3) The battery cell of aspect 2, further comprising: a first current collector plate connected to the first non-coating region and the case; and a second current collector plate connected to the second non-coating region and the pin member.

Aspect 4) The battery cell of aspect 2 or 3, wherein the second non-coating region is spaced farther from the terminal member or the cap plate in a longitudinal direction of the pin member than the first non-coating region.

Aspect 5) The battery cell any one of claims 1 to 4, wherein the pin member includes: a body portion extending from the core in a height direction of the electrode assembly; a first end extending from the body portion and contacting the terminal member; and a second end extending from the body portion and contacting a second current collector plate connected to the case, wherein the first end is disposed closer to the terminal member or the cap plate than the second end.

Aspect 6) The battery cell any one of aspects 1 to 5, further comprising: a first insulating member electrically insulating the first electrode from the terminal member and the pin member; a second insulating member electrically insulating the second electrode from the case; and a third insulating member electrically insulating the second electrode from the cap plate.

Aspect 7) The battery cell of aspect 6, wherein the second insulating member is interposed between the second current collecting plate connected to the case and the case.

Aspect 8) The battery cell any one of aspects 1 to 7, wherein the terminal member protrudes outwardly of the cap plate.

Aspect 9) The battery cell any one of aspects 1 to 8, wherein the pin member protrudes outwardly of the cap plate.

Aspect 10) The battery cell any one of aspects 1 to 9, wherein the pin member includes a material having electrical conductivity.

Aspect 11) The battery cell any one of aspects 1 to 10, wherein the pin member includes a material including aluminum and/or wherein the pin member includes a pin hollow portion inside.

Aspect 12) The battery cell of aspect 5, wherein at least one of the first end or the second end is a closed region.

Aspect 13) The battery cell of aspect 12, wherein the first end and the terminal member are in surface contact or line contact.

Aspect 14) The battery cell of aspect 5, wherein the first end is disposed inside the terminal member.

Aspect 15) The battery cell any one of aspects 1 to 14, wherein a connection region between the second electrode and the pin member is spaced farther from the cap plate in a longitudinal direction of the pin member than a connection region between the first electrode and the case.

## Claims

1. A battery cell, comprising:
an electrode assembly including a first electrode, a second electrode and a separator;
a case accommodating the electrode assembly and electrically connected to the first electrode;
a cap plate connected to the case;
a terminal member provided on the cap plate; and
a pin member disposed on a core of the electrode assembly and electrically connected to the second electrode and the terminal member.

2. The battery cell of claim 1, wherein the first electrode includes:
a first electrode plate including a first active material region, which is a region coated with a first electrode active material, and a first non-coating region bent and extending from the first active material region, and
the second electrode includes:
a second electrode plate including a second active material region, which is a region coated with a second electrode active material, and a second non-coating region bent and extending from the second active material region,
wherein the first non-coating region is connected to the case, and
the second non-coating region is connected to the pin member.

3. The battery cell of claim 2, further comprising:
a first current collector plate connected to the first non-coating region and the case; and
a second current collector plate connected to the second non-coating region and the pin member.

4. The battery cell of claim 2 or 3, wherein the second non-coating region is spaced farther from the terminal member or the cap plate in a longitudinal direction of the pin member than the first non-coating region.

5. The battery cell any one of claims 1 to 4, wherein the pin member includes:
a body portion extending from the core in a height direction of the electrode assembly;
a first end extending from the body portion and contacting the terminal member; and
a second end extending from the body portion and contacting a second current collector plate connected to the case,
wherein the first end is disposed closer to the terminal member or the cap plate than the second end.

6. The battery cell any one of claims 1 to 5, further comprising:
a first insulating member electrically insulating the first electrode from the terminal member and the pin member;
a second insulating member electrically insulating the second electrode from the case; and
a third insulating member electrically insulating the second electrode from the cap plate.

7. The battery cell of claim 6, wherein the second insulating member is interposed between the second current collecting plate connected to the case and the case.

8. The battery cell any one of claims 1 to 7, wherein the terminal member protrudes outwardly of the cap plate.

9. The battery cell any one of claims 1 to 8, wherein the pin member protrudes outwardly of the cap plate.

10. The battery cell any one of claims 1 to 9, wherein the pin member includes a material having electrical conductivity.

11. The battery cell any one of claims 1 to 10, wherein the pin member includes a material including aluminum and/or
wherein the pin member includes a pin hollow portion inside.

12. The battery cell of claim 5, wherein at least one of the first end or the second end is a closed region.

13. The battery cell of claim 12, wherein the first end and the terminal member are in surface contact or line contact.

14. The battery cell of claim 5, wherein the first end is disposed inside the terminal member.

15. The battery cell any one of claims 1 to 14, wherein a connection region between the second electrode and the pin member is spaced farther from the cap plate in a longitudinal direction of the pin member than a connection region between the first electrode and the case.
